# EUROPEAN PATENT APPLICATION

(11) **EP 1 491 299 A1**
(43) Date of publication of application: **29.12.2004**
(21) Application number: 03076990.5
(22) Date of filing: 26.06.2003
(51) Int. Cl.: B25J 17/02, B25J 9/10

(54) **Robot wrist comprising a plurality of parts arranged in series and driven by bevel gears**

(71) Applicant: ABB AB, 721 83 Västeras (SE)
(72) Inventor: Krogedal, Arnulf, 4322 Sandnes (NO)
(74) Representative: Dahlstrand, Björn

(57) **Abstract**

A robot wrist with a plurality of rotatable parts arranged in series with each other arranged to be mounted on a robot arm or automation machine to enable rotary movement of the first wrist part about a first axis, and a second wrist part (2) journalled in the first wrist part. Each wrist part (1,2), may be arranged with one or more gear members to drive a rotary movement and rotate any wrist part relative to another wrist part, and at least one of said gear members of the second wrist part is a bevel gear which is externally toothed. In another embodiment the robot wrist has three wrist parts (1,2,3). The robot wrist also comprises an inner protection hose.

## Description

### TECHNICAL FIELD.

The invention relates to a robot member comprising a journalled joint or wrist and to an industrial robot or other manipulator or automation machine provided with a said robot wrist.

### BACKGROUND ART

US 4,690,012 and DE 3431033 entitled Robot wrist, describes a robot wrist for use with an industrial robot. Industrial robots are used to carry out a very wide range of industrial and/or commercial tasks quickly and accurately. In many applications, for example welding car bodies or painting automobiles, the robot must operate a tool such as an arc welding tip, paint sprayer or a gripper etc. within a confined space. US 4,690,012 describes a robot wrist comprising three independently rotatable wrist parts. A first part is attached to the arm of a robot and rotates about a first axis, a second wrist part is rotatably attached to the first and arranged with gear pinions to rotate the second gear part about a second axis of rotation, and a third wrist part is similarly arranged rotatably mounted on the second part and drivable about a third axis of rotation.

The entire wrist section is formed so as to enclose a hollow space inside the wrist sections to allow positioning of other apparatus inside the wrists. In particular, the hollow interior of the wrist contains a protection hose, or other conduit, through which cables, wires, tubes or smaller hoses are arranged for supplying electric, compressed air or hydraulic power to one or more tools operated by the robot, and/or sending/receiving control signals or sensor data to or from the tool.

The robot wrist described above has a high degree of orientation, can access places inside hollow sections, box sections and has performed well in service. However, the hose inside the robot wrist containing the cables and other hoses tends to become worn in service due to the repeated flexing of the wrist parts, and such inner hoses require more frequent periodic maintenance or repair than would otherwise be desirable. Also, inclusion of power lines, control cables and the like inside the wrist sections is limited by the limited hollow space inside the robot wrist.

### SUMMARY OF THE INVENTION

The invention solves one or more of the above problems. The invention provides a hollow robot wrist with a plurality of rotatable parts arranged in series with each other, comprising at least a first wrist part arranged in use to be mounted to a robot arm or automation machine to enable rotary movement of the first wrist part about a first axis, a second wrist part journalled in the first wrist part, wherein each said wrist part is arranged with one or more gear members to drive a said rotary movement of any said wrist part relative to said another wrist part, wherein at least one pair of said gear members is arranged with a negative camber angle or negative bevel angle (Cₙ) to the plane of rotation (P) of said gear members.

In an advantageous embodiment of the invention the robot wrist comprises a first, a second and a third wrist part.

In another aspect of the invention a robot wrist is provided with an inner protection hose of an improved construction.

The principal advantage of the invention is a robot wrist with a relatively increased diameter of the hollow passage inside the wrist sections. There is relatively more free room inside the robot wrist for the protection hose (or other conduit) to bend and flex, compared to the prior art. Freer, less restricted bending and flexing results in less wear both to the protection hose and the cables, lines or other hoses inside it. This is an advantage which not only reduces wear and damage to cables and power supply wires etc. but also allows robot designers and operators more freedom in the choice and number of features and functions of the robot. This is because the size of the useable hollow space in the wrist section is significantly increased and thereby the potential functionality that can be accommodated.

The primary advantage of this type of robot wrist is that the robot can reach into partially enclosed spaces, such as into a hollow section or a box section of a car body to paint or treat a surface or to weld a joint etc. The improved functionality of the present invention allows the robot to reach into spaces that are too difficult for robots with prior art wrists to reach. The compact shape and improved function provided by the invention increases the number and range of operations that can be cost-effectively carried out by industrial robots or manipulators. It means that more of the repetitive industrial tasks, for example machine tending operations such as supplying and/or removing components to a machine or other robot, and picking and/or packing operations such as picking up items and placing them in a container, may be handled by a robot equipped with a compact hollow robot wrist according to the invention.

The unique design and arrangement of the gear wheels also provides a wrist design that is very compact overall, and thereby offers a reduced outer diameter compared to other hollow wrist designs. This means that the robot wrist can reach into cavities or hollow sections through a smaller access window. A further advantage of the increased size of the inner cavity is that the protection hose bends freely, and does not extend in length in the bent position compared to the straight position, with decreased wear on the protection hose and the hoses, cables it contains. The inner protection hose may as well comprise an advantageous material with an extremely small coefficient of friction, to further reduce wear on the cables, hoses inside the protection hose. At the same time the exterior is more compact than prior art designs while maintaining great flexibility and providing an increased dimension for the inner hole or cavity.

The increased size of the inner hole or cavity is very advantageous because a robot used, for example, in painting applications or any other surface treatment applications, may have around 20 different lines installed inside the protection hose or conduit. Lines such as for supply of different paints, different colours, flushing lines, anti-corrosion fluids, degreasing fluids, solvent lines, air lines, electrical power lines, electrical data connections. Similarly a robot used for welding may have lines for protective gases, flushing materials, fluxes, fluxing atmospheres, a welding wire feed, and so on. The increased space and the symmetrical shape of the space available inside the arm enable a longer service life for the lines, hoses and cables included inside the protection hose, with increased reliability and thereby productive up-time.

Another benefit is that the high degree of orientation capacity in at least two, and preferably three axes of movement provided by the advantageous embodiment of this robot wrist can be fully utilised when required without concern for increased wear of the protection hose or other lines arranged in the hollow space. Yet another advantage provided by the increased useable hollow space in the wrist is that access to the protection hose and other parts during maintenance service work or changes in production, is improved thus reducing down time, service time and set-up time during production changeovers.

### BRIEF DESCRIPTION OF THE DRAWINGS

A more complete understanding of the method and system of the present invention may be had by reference to the following detailed description when taken in conjunction with the accompanying drawings wherein:
Figure 1 shows a robot wrist according to the Prior Art in a straight or extended position.
Figure 2 shows the robot wrist according to the Prior Art in a bent position.
Figure 3 shows a robot wrist according to an embodiment of the invention arranged in a bent position.
Figure 4 shows the robot wrist arranged in a bent position according to an embodiment of the invention;
Figure 5 shows schematically the length of the hose in both a straight and a bent position of the robot wrist.
Figure 6a shows a detail for the gearwheel design of the Prior Art and Figure 6b shows a corresponding detail according to another aspect of the invention;
Figure 7 shows a view in 3D of the exterior of the robot wrist.

### DESCRIPTION OF THE PREFERRED EMBODIMENTS

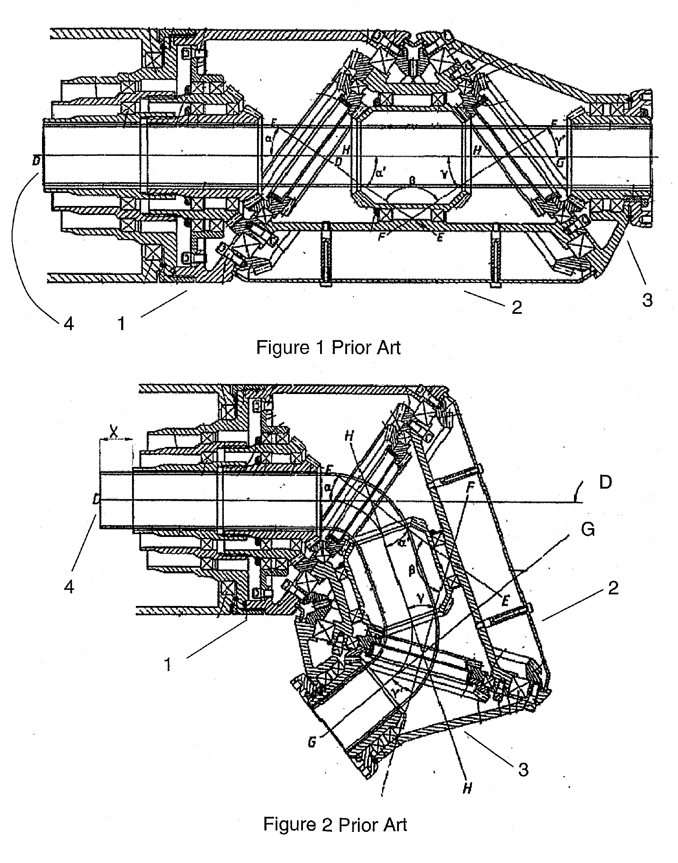

Fig. 1 (Prior Art) shows the robot wrist of US 4,690,012 containing a protection hose and arranged in a straight position. The figure shows a first, second and third wrist parts 1, 2, 3. The axis of rotation for gear members between first and second wrist parts is indicated as A₁, and the axis of rotation for gear members arranged between second and third wrist part as A₂. The hollow structure contains a hose 4 arranged about a nominal centre line D. xxx Figure 2 shows the same wrist arranged in a bent position. The geometry of the hollow space in the Prior Art wrist design does not allow a free bending of the hose 4 which thereby imposes a limit on its service life. It may be said that the hose bends in two places while passing through the inside of the wrist in the fully bent position. The hose is also significantly extended in length when moving from a straight to bent configuration as indicated by the arrows marked X in the drawing.

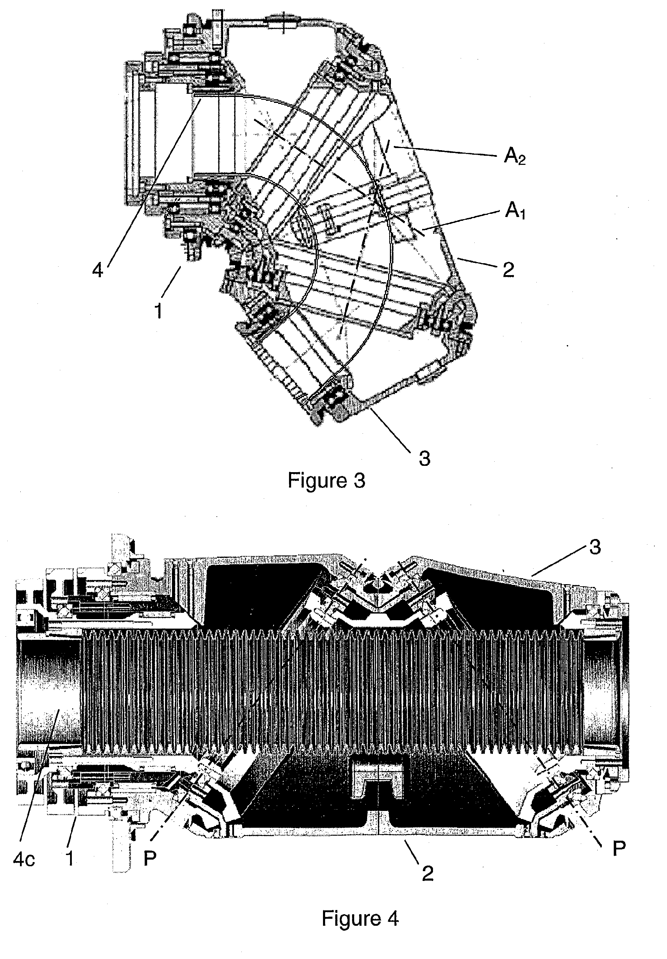

Fig. 3 shows schematically an embodiment according to the invention arranged in a bent position. The figure shows a first, second and third wrist parts 1, 2, 3 and a protection hose 4. The axis of rotation for gear members between first and second wrist parts is indicated as A₁, and the axis of rotation between second and third wrist part as A₂. According to the improved inner geometry of the robot wrist there are no obstacles to prevent symmetrical bending of the protection hose. It may be seen that the hose has a single bend only, forming a single circular arc to accomplish maximum bending while inside the wrist in the fully bent position.

The protection hose (and separate hoses and cables that may be included inside the protection hose but not shown in the figure) shown in Figure 3 have the possibility to bend more freely than in the Prior Art design due principally to a redesigned gearwheel set-up. In the Prior Art design of Figure 2 it is shown how the hose has to bend more than once in the existing design, and that the hose has to travel or extend over the linear distance X when bending from straight to bent position. The repeated travel and/or extension of the Prior Art design inflicts wear on the hoses. Wear on cables and lines inside the protection hose can also be severe, and this travel and/or extension is eliminated or at least to a great extent minimised by the invention.

A preferred embodiment of the present invention is shown in Figure 4. The figure shows the same first, second and third wrist parts of the invention shown in Figure 3 but arranged in a straight position. This may be compared to the equivalent Prior Art in Figure 1. The plane of rotation of the gear members at either end of second (middle) wrist part 2 are indicated by a dashed line and the letter P. Each plane of rotation is perpendicular to the axis of rotation of each gear member, see A₁ and A₂ of Figure 3. It can be seen that the second wrist part 2 in particular is more compact than the equivalent part 2 of the Prior Art. In other words, the small or apex-like side of the cylindrical second wrist part 2 of the invention is more compact than that of the prior art. The invention may be practised by means of the first wrist part and the second wrist part, with a tool of some sort directly attached to the second part. Preferably the invention is practised with three wrist parts in order to get the maximum extent of bending and thus ability to reach into difficult hollow sections, box sections. A protection hose 4c is shown which in this embodiment has a bellows or spiral shape.

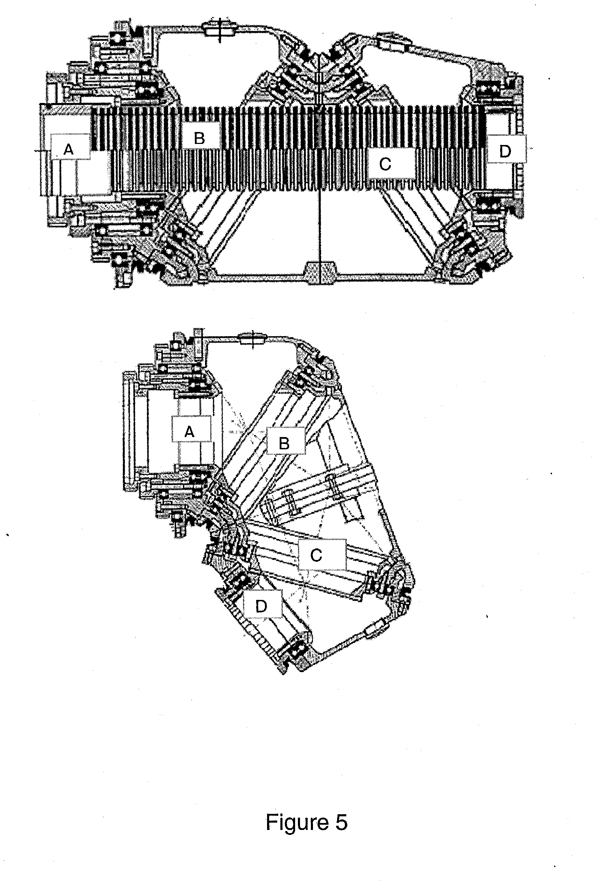

Figure 5 shows a nominal centre line with points A, B, C, D which has a constant length during the bending of the wrist, otherwise described as bending the wrist triangle. In practice the inner protection hose has however a certain radius and it makes short cuts during bending. It also requires radiuses when changing directions. The improved inner hose of the invention allows the bending shortcuts to locally create extra length equal to the length of bending required for the local curve.

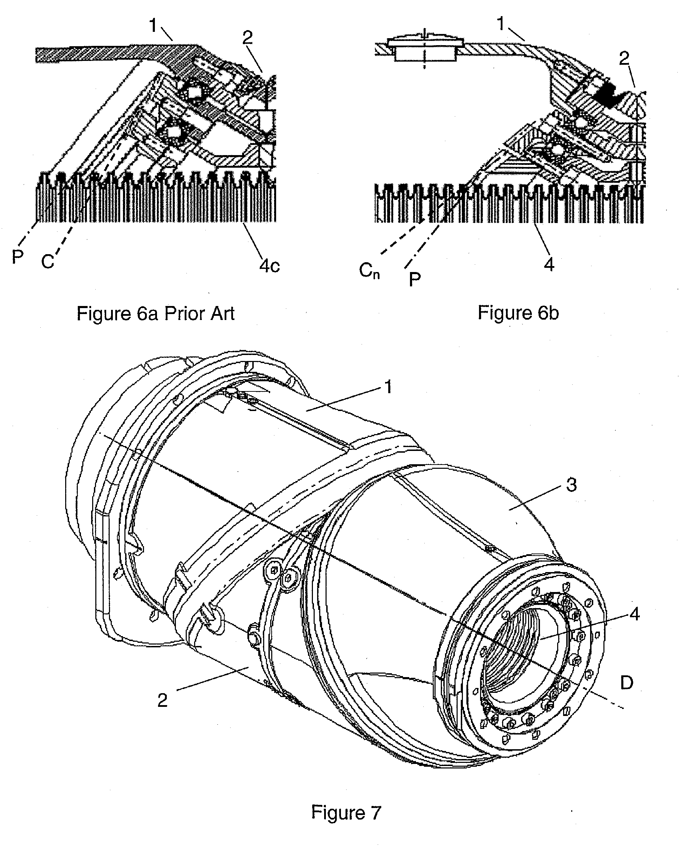

Figure 6a and 6b (Prior Art) show a structural difference between the gearwheel design of the prior art robot wrist version of US 4,690,012 and the gearwheel design of the present invention. According to the invention specially designed annular bevel gears, which may alternatively be described or designed as gear members, gearwheels, ring gears, or bevel gears in which at least one of the meshing pair is a gearwheel design with negative bevel angle has provided an optimal condition for the inner hose and flexible movements of the inner hose in a compact design.

The particularly compact design shown is obtained by the special and unique arrangement and shape of the gear wheels inside the wrist. Figure 6b shows a detail from the area of the joint and gearing between a first 1 and a second 2 wrist part according to the invention and Figure 6a shows a similar detail of the Prior Art. It can be seen that the line along which the gears of the Prior Art mesh is inclined at a positive bevel angle by comparing line C with line P. In contrast, it can be seen that the mating faces of the invention of Figure 6b looking at line Cₙ and the line of the plane of the bevel gears P that there is a negative bevel Cₙ on the gear face shown. The negative bevel angle for at least one gearwheel in the pair first wrist part/second wrist part has enabled the increased inner diameter of the wrist section and removed or reduced previous obstacles hindering free bending of the protection hose. It can be seen from the Prior Art detail of Figure 6b or that there is no such negative bevel angle of the bevel gears. The inventors have found that a negative camber angle or bevel angle of around -10 degrees to be advantageous, although angles of -5 or so and of much greater than 12 are possible.

Figure 7 shows an exterior and 3-d view of the robot wrist in which the first, second and third wrist parts 1, 2, 3 are indicated. A nominal centre line D is shown. Inside one end of the wrist, the third wrist part 3, a protection hose 4 in the form of a corrugated type hose is visible. Inside one end of the wrist the protection hose 4 is visible in the form of a corrugated and ring reinforced or spiral type hose.

As described above, the inner protective hose may contain a plurality of wires, hoses and cables, perhaps a total 20 or more. Extension of the single hoses and cables contained in the inner hose may also be minimised by arranging them in a predetermined pattern in the inner protection hose of the robot wrist before normal operations. By applying for example a predetermined twist, relative to the planned direction and degree of rotation of the wrist parts, it is possible to compensate for variation in length of the individual hoses and cables when the robot wrist rotates and bends during normal operations. For example, a twisted wire format of up to 180 degrees or more may be applied to at least some of the hoses and/or cables when they are installed inside the robot wrist.

In another, preferred embodiment, the inner hose is a flexible articulated hose of the type shown in Figure 4. Superior bending characteristics are obtained by a hose with this type of articulation or bellows form that supports symmetric bending. This type of articulated inner hose tends to bend under applied force in a circularly symmetrical shape. Other, non-circular geometries are also possible for robot wrists with an inner geometry that requires different bending behaviour. The structure of the hose may comprise a single phase plastic material or a layered plastic material.

Elastomeric, other polymeric or composite materials may be used. The plastic material may comprise in part a fluoropolymer, such as the plastic polytetrafluorethylene (PTFE) commonly referred to by the trademark name Teflon (Trade mark of DuPont Inc.), or other fluoropolymer in a blend, copolymer, composite or layered structure. The use of a friction reducing material such as the fluoropolymer greatly reduces any friction between the inside of the protection hose and the wires, cables, hoses etc it contains. Preferably the structure comprises at least two phases and includes reinforcing elements of a different diameter, such as metal rings or plastic rings. The metal rings may in an alternative embodiment be arranged as a continuous spiral or helix of wire arranged towards the outside, or arranged around the outside, of a plastic hose that is moulded to a corrugated form in contrast to a plastic hose combined with discrete rings. The wire rings or spiral may also be covered by a layer of plastic which may be thin.

It should be noted that while the above describes exemplifying embodiments of the invention, there are several variations and modifications which may be made to the disclosed solution without departing from the scope of the present invention as defined in the appended claims.

## Claims

1. A robot wrist with a plurality of rotatable parts arranged in series with each other, comprising at least a first wrist part (1) arranged in use to be mounted to a robot arm or automation machine to enable rotary movement of the first wrist part about a first axis, a second wrist part (2) journalled in the first wrist part, wherein each wrist part is arranged with one or more gear members to drive a said rotary movement of any said wrist part relative to said another wrist part, **characterised in that** at least one of said gear members is arranged with a negative bevel angle (Cₙ) to the plane of rotation (P).

2. A robot wrist according to claim 1, **characterised in that** the negative bevel angle (Cₙ) lies in the range between -5 and - 20 degrees.

3. A robot wrist according to claim 1, **characterised in that** the negative bevel angle (Cₙ) lies in the range between -8 and - 12 degrees.

4. A robot wrist according to claim 1, **characterised in that** the gear member is an annular bevel gear.

5. A robot wrist according to claim 1, **characterised in that** said second wrist part (2) is arranged with a said gear member with the negative bevel angle (Cₙ).

6. A robot wrist according to claim 4, **characterised in that** the negative bevel angle (Cₙ) of the gear member of said second wrist part (2) is arranged to engage a gear member of said first wrist part (1).

7. A robot wrist according to claim 1, **characterised in that** the inner protection hose passing through the inside of the wrist parts in a bent position is arranged in a single circular arc.

8. A robot wrist according to claim 7, **characterised in that** the inner protection hose (4) passing through the inside of the wrist parts (1, 2, 3) has the same total length when arranged in each of a bent and a straight position.

9. A robot wrist according to claim 7, **characterised in that** the inner protection hose is a hose with parallel walls.

10. A robot wrist according to claim 9, **characterised in that** the inner protection hose is a hose with a straight and parallel wall cross-section.

11. A robot wrist according to claim 9, **characterised in that** the inner protection hose is a hose with a wall cross-section in the form of a wave.

12. A robot wrist according to claim 11, **characterised in that** the inner protection hose comprises an articulated hose with circular sections of at least two different diameters.

13. A robot wrist according to claim 11, **characterised in that** the inner protection hose is formed of a polymeric material combined with at least one metal reinforcing member.

14. A robot wrist according to claim 11, **characterised in that** the inner protection hose comprises a polymeric fluoropolymer.

15. A robot wrist according to claim 13, **characterised in that** the metal reinforcing member comprises a plurality of metal rings.

16. A robot wrist according to claim 13, **characterised in that** the metal reinforcing member comprises a spiral wire or a helical wire.

17. A robot wrist according to claim 16, **characterised in that** the metal rings, spiral wire or helical wire of the hose are attached to the outside surface of the polymeric material.

18. A robot wrist according to claim 16, **characterised in that** the rings, spiral wire or helical wire of the hose are embedded in the polymeric material.

19. A robot wrist according to claim 1, **characterised in that** a plurality of hoses and/or cables included inside said inner protection hose (4) inside the wrist parts (1, 2, 3) arranged in the bent position are arranged in a single circular arc.

20. A robot wrist according to claim 19, **characterised in that** the plurality of hoses and/or cables are twisted to a predetermined extent inside the inner protection hose and comprise any from the list of: hose, wire, feed rod, cable.

21. A robot wrist according to claim 20, **characterised in that** the plurality of hoses and/or cables are arranged installed inside the robot wrist twisted to a predetermined extent through 180 degrees.

22. A robot wrist according to claim 1, **characterised in that** the negative bevel angle of gear member of said second wrist part (2) is arranged facing a third wrist part (3).

23. A robot wrist according to any of claims 1-22, **characterised in that** the third wrist part (3) is journalled in the second wrist part (2) to enable rotary movement of the third wrist part relative the second wrist and the second wrist part relative the first.

24. Use of a robot wrist according to any of claims 1-23 for a surface treatment operation or a painting operation with an industrial robot.

25. Use of a robot wrist according to any of claims 1-23 for a welding operation with an industrial robot.

26. Use of a robot wrist according to any of claims 1-23 for a picking and/or packing operation with an industrial robot.

27. Use of a robot wrist according to any of claims 1-23 for a machine tending operation with an industrial robot.
